# EUROPÄISCHE PATENTSCHRIFT

(11) **EP 2 479 541 B1**
(45) Veröffentlichungstag und Bekanntmachung des Hinweises auf die Patenterteilung: **09.06.2021**
(21) Anmeldenummer: 12000359.5
(22) Anmeldetag: 20.01.2012
(51) Int. Cl.: G01F 1/58

(54) **Magnetkreisvorrichtung für ein magnetisch-induktives Durchflussmessgerät**
Magnetic circuit for an electro-magnetic flowmeter
Circuit magnétique pour un débimètre électro-magnétique

(30) Priorität: 20.01.2011 DE 102011009062
(43) Veröffentlichungstag der Anmeldung: 25.07.2012
(73) Patentinhaber: Krohne AG, 4019 Basel (CH)
(72) Erfinder: Neuburger, Stephan, 55271 Stadecken-Elsheim (DE); Paul, Chris, 3069 HP Rotterdam (NL); Neven, Jef, 26540 Mours St. Eusèbe (FR)
(74) Vertreter: Gesthuysen Patentanwälte

(56) Entgegenhaltungen:
- EP-A1- 0 183 859
- EP-A1- 1 674 836
- DE-A1-102006 020 265
- DE-A1-102008 035 740
- DE-A1-102009 001 413
- US-A- 4 932 268
- US-A- 5 767 418
- US-B1- 6 237 424

## Beschreibung

Die Erfindung betrifft eine Magnetkreisvorrichtung gemäß dem Oberbegriff des Patentanspruchs 1. Darüber hinaus betrifft die Erfindung auch ein magnetisch-induktives Durchflussmessgerät gemäß dem Patentanspruch 11.

Bekanntlich gibt es keine "offenen Magnetfelder", sondern nur "geschlossene Magnetkreise". Wenn es also zuvor heißt, dass wenigstens ein magnetisch leitendes Verbindungselement zum Magnetschluss des Magnetkreises vorgesehen ist, dann ist dieses magnetisch leitende Verbindungselement Teil des Magnetkreises, also der Teil des Magnetkreises, der dazu führt, dass es sich tatsächlich um einen Magnetkreis, also um einen geschlossenen Magnetkreis handelt.

Die Erzeugung eines Magnetfeldes im Messrohr eines magnetisch-induktiven Durchflussmessgeräts ist essentiell für die Realisierung des Messprinzips, das auf der Trennung bewegter Ladungen in einem Magnetfeld beruht. Die messtechnische Grundlage bildet ein Messrohr aus einem nichtmagnetischen Werkstoff, beispielsweise aus einem nichtmagnetischen Metall, das auf der Strömungsseite durch eine isolierende Auskleidung elektrisch von dem Messfluid isoliert ist und das von einem durch die Spule der Magnetkreisvorrichtung erzeugten Magnetfeld senkrecht zur Strömungsrichtung durchsetzt ist. Wird das Messrohr von einem Messfluid mit einer elektrischen Mindestleitfähigkeit durchflossen, werden die in dem leitfähigen Messfluid vorhandenen Ladungsträger durch das Magnetfeld abgelenkt. An senkrecht zum Magnetfeld und zur Strömungsrichtung angeordneten Messelektroden entsteht durch die Ladungstrennung eine Potentialdifferenz, also eine Spannung, die mit einem Messgerät erfasst und als Messspannung ausgewertet wird. Die Messspannung ist proportional zur Strömungsgeschwindigkeit der mit dem Messfluid bewegten Ladungsträger, so dass aus der Strömungsgeschwindigkeit auf den Durchfluss im Messrohr geschlossen werden kann.

Aus der Druckschrift DE 10 2006 020 265 A1 ist eine Magnetkreisvorrichtung bekannt, die zum Teil integrativ durch das Messrohr gebildet wird. An dem Messrohr sind Spulenhalterungen als integraler Bestandteil des Messrohres ausgebildet, die die Spulenkerne bilden. In einem Übergangsbereich zwischen Spulenhalterung und Messrohr ist ein Polschuh vorgesehen, der durch eine lokale Verdickung der Messrohrwand gebildet ist. Zudem weist die Magnetkreisvorrichtung ein Feldleit-Element auf, das durch ein oder mehrere Blechelemente gebildet ist und an der Spulenhalterung befestigt ist. Das Feldgleitelement weist eine im wesentlichen ringförmige Außenkontur auf und umgreift beide Polschuhe gleichermaßen.

Aus der EP 0 183 859 A1 ist ein magnetisch-induktive Durchflussmessgerät mit einer Magnetkreisvorrichtung bekannt, die einen rechreckige Außenkontur aufweist und zwei sich an die Außenkontur des Messrohres angepasste Polschuhe umgreift.

Weitere magnetisch-induktive Durchflussmessgeräte sind aus den Druckschriften US 6,237,424 und US 5,767,418 bekannt. Das magnetisch-induktive Durchflussmessgerät der US 5,767,418 weist ebenfalls eine Magnetkreisvorrichtung mit einer rechteckigen Außenkontur auf.

Magnetisch-induktive Durchflussmessgeräte haben den Vorteil, dass sie in die Strömung innerhalb des Messrohres praktisch nicht eingreifen, so dass die Strömung ungestört bleibt, wobei das Messprinzip ohne Weiteres Genauigkeiten im Bereich von 1 % v. M. (v. M. = vom Messwert) erreicht, teilweise sogar bessere Genauigkeiten erzielt werden können.

Der Aufbau von magnetisch-induktiven Durchflussmessgeräten ist jedoch verhältnismäßig anspruchsvoll, genau wie die Auswertung der Messsignale, so dass magnetisch-induktive Durchflussmessgeräte für Massenanwendungen im low-cost-Bereich - beispielsweise als Hauswasserzähler - bislang nicht in Frage kommen.

Im übrigen besteht ein Problem darin, dass zur Erzeugung eines für die Messung ausreichend starken Magnetfeldes zwischen den sich gegenüberstehenden Polelementen dauerhaft eine elektrische Leistung zur Verfügung gestellt werden muss, die einen beachtlichen Anteil an der insgesamt zum Betrieb eines magnetisch-induktiven Durchflussmessgeräts erforderlichen elektrischen Leistung hat. Aus diesem Grund sind netzfrei zu betreibende magnetisch-induktive Massedurchflussmessgeräte schwer zu realisieren, jedenfalls dann nicht, wenn wartungsfreie Betriebszeiten von mehreren Jahren realisiert werden sollen.

Aufgabe der Erfindung ist es daher, eine Magnetkreisvorrichtung zur Realisierung des Magnetkreises eines magnetisch-induktiven Durchflussmessgerät anzugeben, die preiswert gefertigt werden kann und sich durch eine erheblich reduzierte Leistungsaufnahme auszeichnet, so dass damit auch magnetisch-induktive Durchflussmessgeräte für netzfreie Massenanwendungen realisiert werden können.

Die zuvor hergeleitete und aufgezeigte Aufgabe ist bei der eingangs beschriebenen Magnetkreisvorrichtung dadurch gelöst, dass ein erstes magnetisch leitendes Verbindungselement mit einer Schmalseite eines ersten Polelements verbunden ist, ein zweites magnetisch leitendes Verbindungselement mit der gegenüberliegenden Schmalseite des ersten Polelements verbunden ist und das erste Verbindungselement, das zweite Verbindungselement und das erste Polelement ein ringkreisförmiges Magnetkreiselement bilden, das die ringförmige Außenkontur der Magnetkreisvorrichtung definiert.

Der Querschnitt des Spulenkerns der Spule oder/und der magnetisch leitenden Verbindungselemente ist so klein wie möglich. Mit "so klein wie möglich" ist eine Dimensionierung gemeint, die dazu führt, dass gerade keine Sättigung eintritt. Diese Lehre "so klein wie möglich" kann angewendet werden auf den Querschnitt des Spulenkerns der Spule, auf den Querschnitt der magnetisch leitenden Verbindungselemente, insbesondere natürlich sowohl auf den Querschnitt des Spulenkerns der Spule als auch auf den Querschnitt der magnetisch leitenden Verbindungselemente.

Es ist zunächst erkannt worden, dass bei bekannten magnetisch-induktiven Durchflussmessgeräten ein signifikanter Teil der aufgenommenen elektrischen Leistung in magnetischen Streufeldern ungenutzt "verlorengeht". Dadurch, dass der Querschnitt des Spulenkerns der Spule oder / und der magnetisch leitenden Verbindungselemente so klein wie möglich ist, vorzugsweise also der Querschnitt des Spulenkerns der Spule und der Querschnitt der magnetisch leitenden Verbindungselemente so gewählt ist, wird das - nie ganz zu vermeidende - Streufeld so weit reduziert, wie unter Berücksichtigung aller relevanten Parameter möglich.

Bei einer bevorzugten Ausführungsform der erfindungsgemäßen Magnetkreisvorrichtung ist das magnetisch leitende Verbindungselement bzw. sind die magnetisch leitenden Verbindungselemente bogenförmig ausgestaltet, so dass die resultierende Magnetkreisvorrichtung eine ringförmige Außenkontur aufweist und wenigstens eines der flächigen Polelemente weiträumig umgreift. Zu dieser ergänzenden Lehre gehört die Erkenntnis, dass typische Magnetkreisvorrichtungen bei magnetisch-induktiven Durchflussmessgeräten magnetisch leitende Verbindungselemente aufweisen, die möglichst eng dem Messrohr des magnetisch-induktiven Durchflussmessgeräts benachbart sind, so dass verschiedene Elemente bekannter Magnetkreisvorrichtungen sich mit geringem Abstand gegenüberstehen und so die Ausbildung von magnetischen Streufeldern berücksichtigt wird.

Untersuchungen haben ergeben, dass der Streufeldanteil derartiger aus dem Stand der Technik bekannter Magnetkreisvorrichtungen über 80 % des insgesamt erzeugten magnetischen Feldes betragen kann, so dass nur ein sehr geringer Anteil der aufgewendeten Energie überhaupt in das für die Messung relevante Nutzfeld fließt. Dadurch, dass die magnetisch leitenden Verbindungselemente so geführt sind, dass sie eine ringförmige Außenkontur der Magnetkreisvorrichtung bilden und wenigstens eines der flächigen Polelemente weiträumig umgreifen, können Streufelder in einem erheblichen Maße verhindert werden. Ein weiträumiger Umgriff wenigstens eines der flächigen Polelemente ist insbesondere dann erreicht, wenn der Streufeldanteil auf weniger als 35 % des erzeugten Magnetfeldes, vorzugsweise auf unter 25 % des erzeugten Magnetfeldes reduziert ist.

Von den zuvor beschriebenen Konstruktionen einer Magnetkreisvorrichtung ist unter anderem im Stand der Technik auch deshalb abgesehen worden, weil eine entsprechende Realisierung bei üblichen Nenndurchmessern des Messrohres keine Akzeptanz finden würde, da ein weiträumiger Umgriff der flächigen Polelemente die Gehäuseabmessungen eines resultierenden magnetisch-induktiven Durchflussmessgeräts erheblich vergrößerte; beachtlich ist hier, dass magnetisch-induktive Durchflussmessgeräte für Nenngrößen bis zu DN 3.000 gefertigt werden. Vorliegend ist jedoch erkannt worden, dass für typische Hausanwendungen bei denen Nenngrößen des Messrohres nur wenige zehn Millimeter ausmachen, auch ein weiträumiger Umgriff der flächigen Polelemente durch die ringförmige Außenkontur der Magnetkreisvorrichtung keine relevante Einschränkung darstellt. Vorzugsweise ist die ringförmige Außenkontur - von außen betrachtet - überall konvex.

Bei einer wiederum bevorzugten Ausführungsform der erfindungsgemäßen Magnetkreisvorrichtung ist zur Realisierung des weiträumigen Umgriffs wenigstens eines der flächigen Polelemente durch die ringförmige Außenkontur der Magnetkreisvorrichtung vorgesehen, dass der kleinste Durchmesser der ringförmigen Außenkontur wenigstens den 1,5-fachen Abstand der sich gegenüberliegenden flächigen Polelemente aufweist. Die sich gegenüberstehenden flächigen Polelemente, zwischen denen sich das Magnetfeld ausbildet, sind üblicherweise nicht weiter als nötig von dem Messrohr beabstandet, liegen sogar teilweise auf dem Messrohr auf. Dadurch, dass die ringförmige Au-ßenkontur der Magnetkreisvorrichtung mit einem Durchmesser von wenigstens dem 1,5-fachen Abstand der Distanz zwischen den flächigen Polelementen versehen wird, ist sichergestellt, dass Elemente der Magnetkreisvorrichtung so weit voneinander beabstandet sind, dass sich Streufelder nur in geringem Maße ausbilden können. Ein besonders gutes Ergebnis wird dann erzielt, wenn der kleinste Durchmesser der ringförmigen Außenkontur in etwa den doppelten Abstand der sich gegenüberliegenden flächigen Polelemente aufweist. Dies stellt einen guten Kompromiss zwischen Streufeldvermeidung und akzeptablen Gehäuseabmessungen des magnetisch-induktiven Durchflussmessgeräts dar.

Wenn es heißt, dass die Magnetkreisvorrichtung eine ringförmige Außenkontur aufweist, dann ist damit nicht einengend ein Kreisring gemeint. Vielmehr handelt es sich um eine im Wesentlichen einen Ring bildende Außenkontur, die selbstverständlich asymmetrisch sein kann und abschnittsweise Abflachungen aufweisen kann. Wenn die Außenkontur asymmetrisch ist bzw. nicht streng kreisringförmig ist, dann kann unter dem Durchmesser der ringförmigen Außenkontur eine solche Abstandslinie verstanden werden, die durch den Flächenmittelpunkt bzw. Flächenschwerpunkt verläuft.

Die Realisierung der erfindungsgemäßen Magnetkreisvorrichtung kann weiter dadurch verbessert werden, dass die Kontur der Magnetkreisvorrichtung in der durch die ringförmige Außenkontur gebildeten Ebene Richtungsänderungen unter einem Winkel von wenigstens 90° vollzieht, wodurch bewirkt wird, dass sich spitze Winkel in dem Magnetkreis nicht ausbilden können und sich Magnetkreiselemente nicht - abgesehen von den Polelementen -direkt gegenüberstehen; dadurch können ebenfalls Streufeldverluste minimiert werden. Mit den Richtungsänderungen sind insbesondere sprunghafte Richtungsänderungen gemeint, da bei den geforderten bogenförmigen Ausgestaltungen der Verbindungselemente ohnehin sichergestellt ist, dass Richtungsänderungen allmählich und unter Vermeidung sich annähernder magnetfeldführender Teile vollzogen werden.

Bei einer weiteren vorteilhaften Ausführung der erfindungsgemäßen Magnetkreisvorrichtung ist die Spule als Zylinderspule ausgebildet, insbesondere mit einem Länge/Durchmesser-Verhältniss größer 4, vorzugsweise größer 5. So kann ein sehr homogenes Magnetfeld verlustarm erzeugt werden, insbesondere dann, wenn die Spule orthozyklisch gewickelt ist. Bevorzugt werden die Windungen der Spule direkt auf den Spulenkern gewickelt, so dass der erforderliche magnetische Fluss mit einer Spule erzeugt werden kann, die gegenüber den üblicherweise voluminös bauenden Spulen eine erheblich kleinere Eigeninduktivität und einen erheblich kleineren ohmschen Widerstand aufweist, was die erforderliche Leistungsaufnahme zur Erzeugung des gewünschten magnetischen Nutzfeldes weiter reduziert.

Vorzugsweise sind die konstruktiven Elemente, die die Magnetkreisvorrichtung bilden, in einer Ebene angeordnet, wobei die Magnetkreisvorrichtung senkrecht zu dieser Ebene praktisch nicht erstreckt ist, abgesehen von den Polelementen, die natürlich auch senkrecht zu der Erstreckungsebene ausgedehnt sind, in der die Verbindungselemente ausgebildet sind, damit ein hinreichend räumlich erstrecktes Magnetfeld überhaupt erzeugt werden kann, um einen messtechnisch auswertbaren Ablenkungseffekt bei bewegten Ladungen bewirken zu können. Bevorzugt ist vorgesehen, dass die Spule radial in den Innenbereich der ringförmigen Außenkontur der Magnetkreisvorrichtung ragt, die Spule also auch in der wesentlichen Erstreckungsebene der Magnetkreisvorrichtung liegt. Auf diese Weise lässt sich besonders einfach realisieren, dass im Übergangsbereich von der Spule zu der ringförmigen Außenkontur der Magnetkreisvorrichtung, die durch die leitenden Verbindungselemente gebildet wird, zumindest ein 90°-Winkel vorliegt, was einen vorteilhaften Effekt auf die - verringerte - Ausbildung von Streufeldern hat.

Erfindungsgemäß ist vorgesehen, dass ein erstes magnetisch leitendes Verbindungselement mit einer Schmalseite eines ersten Polelements verbunden ist, ein zweites magnetisch leitendes Verbindungselement mit der gegenüberliegenden Schmalseite des ersten Polelements verbunden ist und das erste Verbindungselement, das zweite Verbindungselement und das erste - mit beiden Verbindungselementen verbundene - Polelement zusammen ein ringförmiges Magnetkreiselement bilden, das dann die ringförmige Außenkontur der Magnetkreisvorrichtung definiert. Dieses ringförmige Magnetkreiselement ist besonders vorteilhaft einstückig herstellbar.

Eine besonders vorteilhaft Lösung wird dann erzielt, wenn die freien, nicht mit dem ersten Polelement verbundenen Enden des ersten Verbindungselements und des zweiten Verbindungselements sich über und entfernt von der Flachseite des ersten Polelements unter Ausbildung eines Ringspaltes in der ringförmigen Magnetkreisvorrichtung annähern. Dies ist vor allem für die Montage der Magnetkreisvorrichtung in einem dafür vorgesehenen magnetisch-induktiven Durchflussmessgerät vorteilhaft, da - je nach Materialstärke des ersten Polelements und der beiden Verbindungselemente - die Verbindungselemente dann unter Öffnung des Ringspaltes aufgebogen und um das Messrohr gelegt werden können, so dass sich die Magnetkreisvorrichtung praktisch in einem beliebigen Montagezustand des magnetisch-induktiven Durchflussmessgeräts einbauen lässt, solange das Durchflussmessgerät nicht komplett durch ein Gehäuse geschlossen ist. Das ist besonders vorteilhaft, wenn berücksichtigt wird, dass die Messrohre von magnetisch-induktiven Durchflussmessgeräten im Bereich der Polelemente in Querschnitt und Umfang anders geformt sein können als im Bereich der Enden und Anschlussstücke des Messrohres, so dass es häufig nicht einfach möglich ist, ein Messrohr zwischen die Polelemente einer Magnetkreisvorrichtung einzuführen.

Im Zusammenhang mit dem, was zuvor erläutert worden ist, hat es sich ferner als vorteilhaft herausgestellt, wenn die Spule, ein an einem Ende der Spule angeordnete Polelement und ein an dem anderen Ende der Spule angeordnetes Koppelelement ein radiales Magnetkreiselement bilden und das Koppelelement so ausgebildet ist, dass es mit freien Enden der Verbindungselemente verbindbar ist, insbesondere nämlich mit den freien Enden der Verbindungselemente des zuvor beschriebenen ringförmigen Magnetkreiselements. Auf diese Art und Weise lassen sich das leicht vormontierbare ringförmige Magnetkreiselement und das radiale Magnetkreiselement bei der Montage eines magnetisch-induktiven Durchflussmessgeräts einfach zu einer vollständigen Magnetkreisvorrichtung durch Zusammenfügen komplettieren. Durch diese einfach Art der Fertigung ist es möglich, die Herstellungskosten eines die erfindungsgemäße Magnetkreisvorrichtung nutzenden magnetisch-induktiven Durchflussmessgeräts ganz erheblich zu reduzieren, so dass derartige magnetisch-induktive Durchflussmessgeräte auch für den Massenmarkt interessant werden können.

Die der Erfindung zugrunde liegende Aufgabe ist bei dem eingangs beschriebenen magnetisch-induktiven Durchflussmessgerät dadurch gelöst, dass als Magnetkreisvorrichtung zur Realisierung des Magnetkreises eine Magnetkreisvorrichtung vorgesehen ist, wie sie vorstehend beschrieben worden ist. Die erfindungsgemäße Magnetkreisvorrichtung ist nicht nur an sich vorteilhaft, sondern insbesondere vor allem in Zusammenhang mit einem magnetisch-induktiven Durchflussmessgerät, was sich allein aus der Tatsache ergibt, dass ein solches magnetisch-induktives Durchflussmessgerät damit ohne Weiteres auch mit einer geringen Betriebsspannung und mit einer geringen elektrischen Leistung betrieben werden kann und sich damit - beispielsweise als Hauswasserzähler - auch als Massenprodukt im Bereich von Einzelhaushalten eignet.

Wenn mit der erfindungsgemäßen Magnetkreisvorrichtung ein magnetisch-induktives Durchflussmessgerät zum Anschluss an Leitungen mit Nennweiten von wenigen zehn Millimetern realisiert wird, reicht beispielsweise eine Betriebsspannung kleiner drei Volt, so dass die Betriebsspannung aus handelsüblichen Batterien gewonnen werden kann. Es ist also nicht erforderlich, auf einer relativ niedrigen Batteriespannung eine höhere Betriebsspannung zu erzeugen, wie dies bei bekannten magnetisch-induktiven Durchflussmessgeräten üblicherweise der Fall ist, bei denen Betriebsspannungen von mehreren zehn Volt verwendet werden, beispielsweise von fünfzig Volt. Die niedrige Betriebsspannung hat ferner den Vorteil, dass auch die sonst erforderlichen Isolierungsmaßnahmen an der Spule unterbleiben können - Stichwort Zündschutz -, da ohnehin nur niedrige Leistungen und damit verbundene Energien erforderlich sind. Von Bedeutung ist insoweit vor allem auch, dass eine Abschirmung zwischen der Spule und den Elektroden nicht erforderlich ist.

Für die erfindungsgemäße Magnetkreisvorrichtung bzw. für das erfindungsgemäße magnetisch-induktive Durchflussmessgerät ist weiter von Vorteil der mögliche geringe Widerstand und die mögliche geringe Induktivität der Spule. Damit geht einher die Möglichkeit, die Einschwingzeit, auch bei einer Betriebsspannung kleiner drei V, auf weniger als eine Millisekunde zu bringen, was wiederum vorteilhaft ist für den Energieverbrauch.

Im Einzelnen gibt es nun eine Vielzahl von Möglichkeiten, die erfindungsgemäße Magnetkreisvorrichtung auszugestalten und weiterzubilden. Dazu wird verwiesen auf die dem Patentanspruch 1 nachgeordneten Patentansprüche sowie auf die Beschreibung von bevorzugten Ausführungsbeispielen in Verbindung mit der Zeichnung. In der Zeichnung zeigen:
- Fig. 1: in einer perspektivischen Ansicht ein Ausführungsbeispiel einer erfindungsgemäßen Magnetkreisvorrichtung,
- Fig. 2-4: das Ausführungsbeispiel nach Fig. 1 in Vorderansicht, Draufsicht und Seitenansicht,
- Fig. 5: einen Teil der Magnetkreisvorrichtung gemäß den vorstehenden Figuren in Form eines ringförmigen Magnetkreiselements,
- Fig. 6, 7: einen weiteren Teil der Magnetkreisvorrichtung gemäß den Fig. 1 bis 4 in Form eines radialen Magnetkreiselements, perspektivisch, in Seitenansicht sowie Draufsicht und
- Fig. 8: ein nicht erfindungsgemäßes Ausführungsbeispiel einer Magnetkreisvorrichtung.

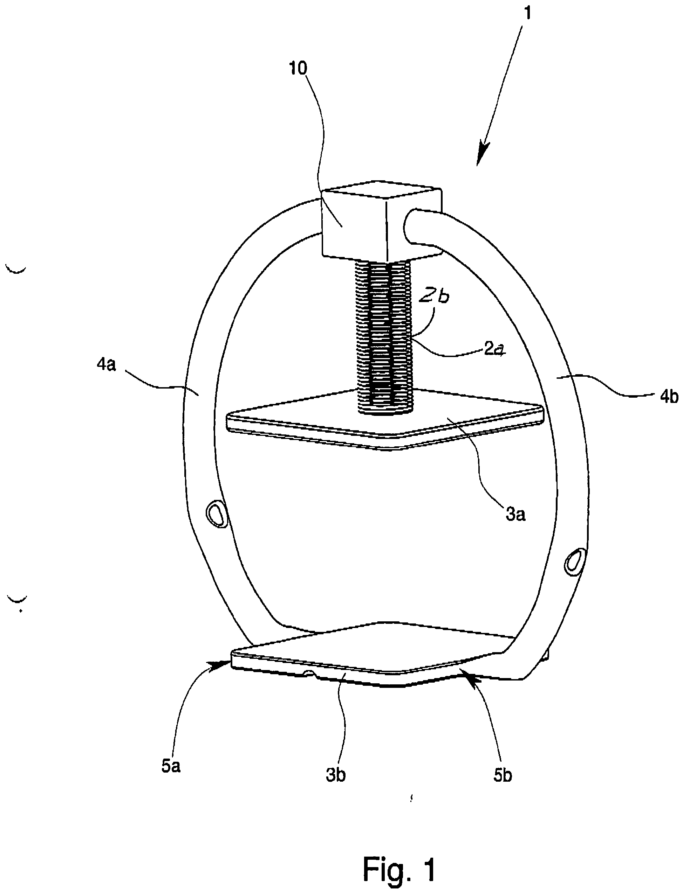

In Fig. 1 ist zunächst in einer perspektivischen Ansicht eine erfindungsgemäße Magnetkreisvorrichtung 1 dargestellt, die für ein magnetisch-induktives Durchflussmessgerät gedacht ist und zur Realisierung eines Magnetkreises dient. Das Magnetfeld wird durch die einen Spulenkern 2a aufweisende Spule 2b erzeugt, wobei sich das Magnetfeld auch zwischen den zwei sich gegenüberstehenden flächigen Polelementen 3a, 3b ausbreitet, so dass ein zwischen den sich gegenüberstehenden flächigen Polelementen 3a, 3b vorgesehenes Messrohr im Wesentlichen senkrecht zur Strömungsrichtung von einem Magnetfeld durchflutet wird, so dass Ladungsträger in der für die Messung erforderlichen Art und Weise abgelenkt werden. Es sind ferner magnetisch leitende Verbindungselemente 4a, 4b vorgesehen, mit denen der Magnetkreis geschlossen wird.

Nicht dargestellt ist, dass der Querschnitt des Spulenkerns 2a der Spule 2b und der magnetisch leitenden Verbindungselemente 4a, 4b so klein wie möglich ist. Was damit gemeint und was damit erreicht ist, ist weiter oben erläutert.

Um ein möglichst geringes magnetisches Streufeld zu erzeugen, sind die magnetisch leitenden Verbindungselemente 4a, 4b bogenförmig ausgestaltet, so dass die resultierende Magnetkreisvorrichtung 1 eine ringförmige Außenkontur aufweist und eines der flächigen Polelemente 3a, 3b - im vorliegenden Fall das Polelement 3a - weiträumig umgreift. Das dargestellte "weiträumige Umgreifen" wenigstens eines der Polelemente 3a, 3b führt dazu, dass sich möglichst wenige Elemente der Magnetkreisvorrichtung 1 in unmittelbarer Nähe gegenüberstehen, so dass die Stärke der - praktisch nicht vermeidbaren - Streufelder erheblich reduziert ist im Vergleich zu aus dem Stand der Technik bekannten Magnetkreisvorrichtungen. Da der Anteil des Streufeldes gering ist, ist ein Großteil der aufgewendeten Energie zur Erzeugung des gesamten Magnetfeldes nutzbar für das magnetische Nutzfeld zwischen den Polelementen 3a, 3b.

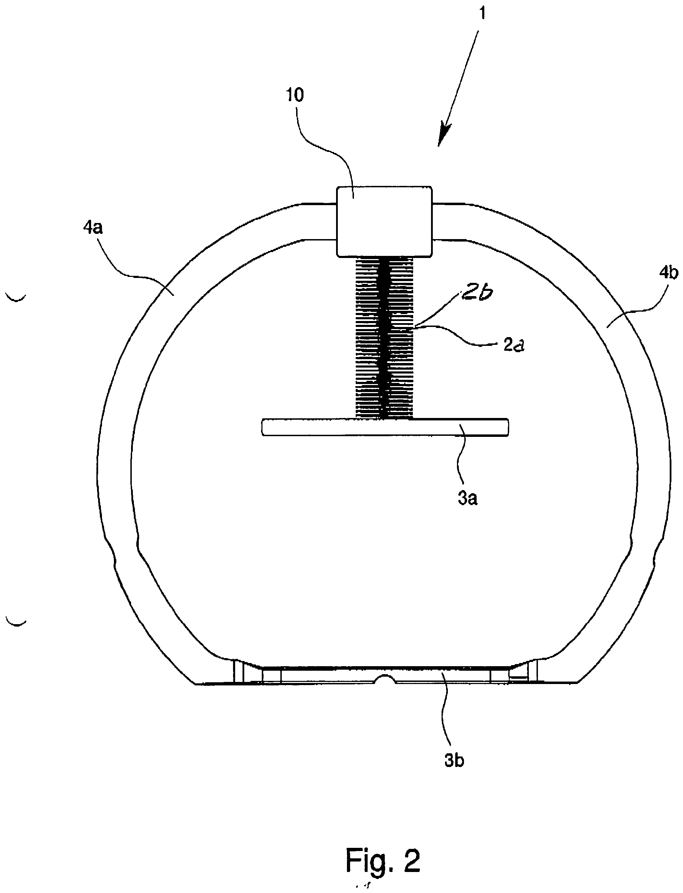

Das weiträumige Umgreifen des Polelements 3a durch die magnetisch leitenden Verbindungselemente 4a, 4b ist besonders gut in der Vorderansicht gemäß Fig. 2 zu erkennen. Dieser Vorderansicht kann ebenfalls entnommen werden, dass der kleinste Durchmesser der ringförmigen Außenkontur der Magnetkreisvorrichtung 1 in etwa dem doppelten Abstand der sich gegenüberliegenden Flächen der Polelemente 3a, 3b entspricht. Diese Bemessung zusammen mit der bogenförmigen Ausgestaltung der magnetisch leitenden Verbindungselemente 4a, 4b stellt hinreichende Abstände der Elemente der Magnetkreisvorrichtung 1 zueinander sicher. Der Vorderansicht gemäß Fig. 2 ist auch zu entnehmen, dass sprunghafte Änderungen der Kontur der Magnetkreisvorrichtung 1 in der durch die ringförmige Außenkontur gebildeten Ebene in einem Winkel von etwa 90° vollzogen werden, wobei die Kontur des Magnetkreises auch gebildet wird durch die radial in den Innenbereich der ringförmigen Au-ßenkontur hineinragende Spule 2b. Die Spule 2b ist direkt benachbart zu dem Polelement 3a angeordnet und steht senkrecht auf dessen Polfläche, so dass hier ebenfalls Richtungsänderungen in der Kontur unter einem Winkel von wenigstens 90° realisiert sind.

Die in den Figuren dargestellten Magnetkreisvorrichtungen weisen sämtlich Spulen 2b auf, die ein Länge/Durchmesser-Verhältnis von knapp über 4, aber auch über 5 haben und deren Windungen orthozyklisch gewickelt sind, so dass sich eine ausreichende Feldstärke bereits mit verhältnismäßig wenig Windungen bei kleinen Strömen realisieren lässt.

Um über eine gewisse Messstrecke hinweg ein wirksames Magnetfeld erzeugen zu können, haben die flächigen Polelemente 3a, 3b in der Ebene der ringförmigen Außenkontur der Magnetkreisvorrichtung 1 eine Längserstreckung von etwa der Hälfte des maximalen Durchmessers der ringförmigen Außenkontur. Im dargestellten Ausführungsbeispiel sind die Polelemente 3a, 3b flach und eben ausgeführt, da die gezeigt Magnetkreisvorrichtung 1 dazu gedacht ist, bei einem Messrohr eingesetzt zu werden, dessen Strömungskanal im Bereich der Magnetfelddurchflutung abgeflacht ausgebildet ist, vorliegend nämlich im Bereich der flachen Polelemente 3a, 3b.

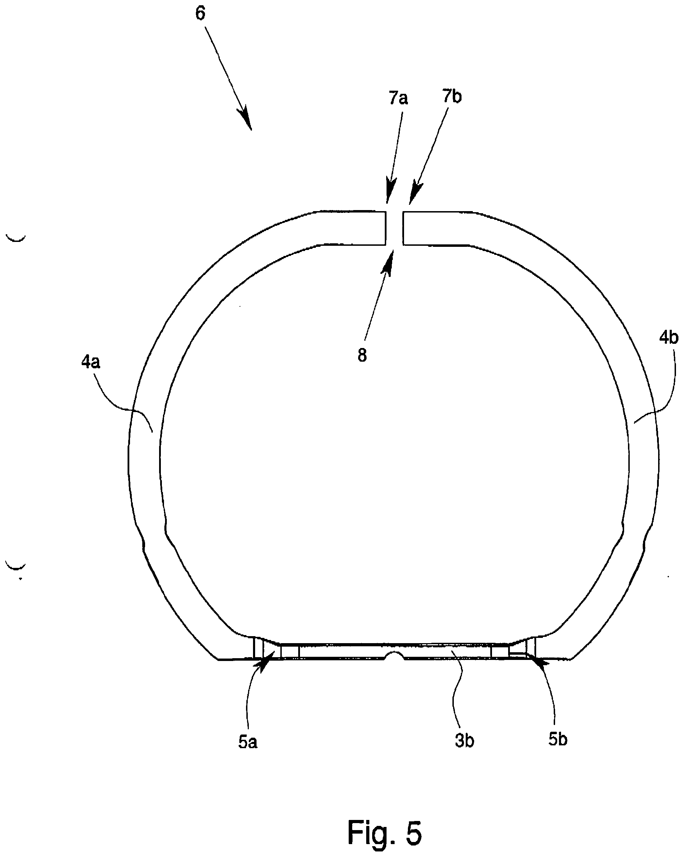

Die Vorderansicht gemäß Fig. 5 stellt dar, dass ein erstes magnetisch leitendes Verbindungselement 4a mit einer Schmalseite 5a eines ersten Polelements 3b verbunden ist und ein zweites magnetisch leitendes Verbindungselement 4b mit der gegenüberliegenden Schmalseite 5b des ersten Polelements 3b verbunden ist. Vorliegend bilden das erste Verbindungselement 4a, das zweite Verbindungselement 4b und das erste Polelement 3b ein ringförmiges Magnetkreiselement 6, das die ringförmige Außenkontur der Magnetkreisvorrichtung 1 definiert, wobei hier das ringförmige Magnetkreiselement 6 einstückig ausgebildet ist. In dem dargestellten Ausführungsbeispiel ist das ringförmige Magnetkreiselement 6 durch Metallpulverspritzgießen (metal injection molding) erhalten worden. Als Material liegt hier die Eisen-Nickel-Legierung FeNi 50 zugrunde.

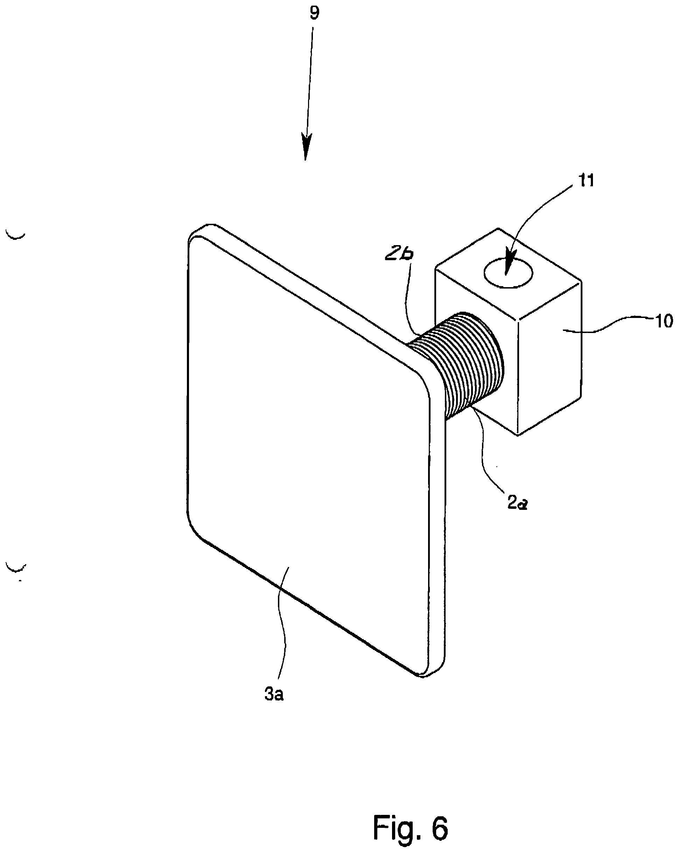

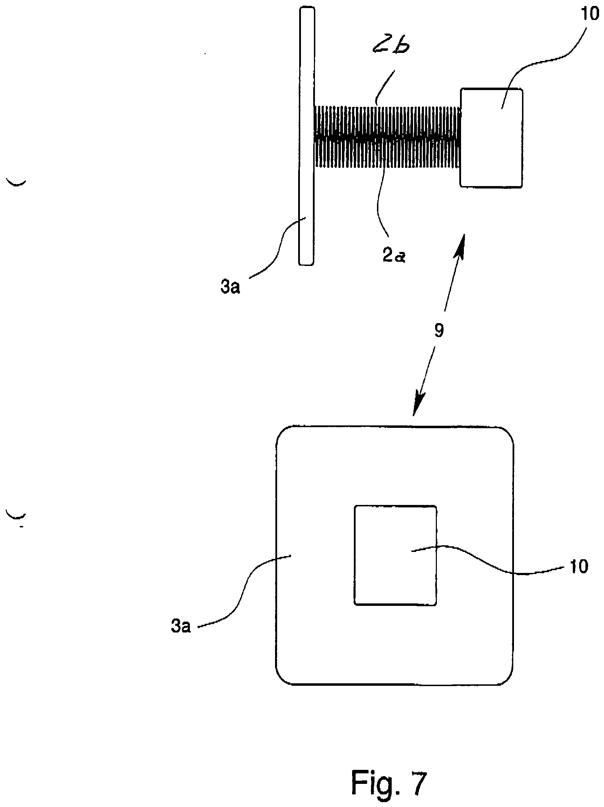

Fig. 5 zeigt ebenfalls, dass das freie, nicht mit dem ersten Polelement 3b verbundene Ende 7a des ersten Verbindungselements 4a und das freie, nicht mit dem ersten Polelement 3b verbundene Ende 7b des zweiten Verbindungselements 4b sich über und entfernt von der Flachseite des ersten Polelements 3b unter Ausbildung eines Ringspaltes 8 annähern. Bei hinreichend elastischer Ausführung dieses ringförmigen Magnetkreiselements 6 ist es möglich, das Magnetkreiselement 6 bei der Montage aufzubiegen und um das Messrohr des entstehenden magnetisch-induktiven Durchflussmessgeräts zu führen, wo es sich dann in Position bringen lässt. Das ringförmige Magnetkreiselement 6 ist vor allem mit dem in den Fig. 6 und 7 dargestellten radialen Magnetkreiselement 9 besonders gut einsetzbar.

Das in den Fig. 6 und 7 dargestellte "radiale" Magnetkreiselement 9 wird gebildet aus der Spule 2b, dem an einem Ende der Spule 2b angeordneten Polelement 3a und einem an dem anderen Ende der Spule 2b angeordneten Koppelelement 10. Das Koppelelement ist so ausgebildet, dass es mit den freien Enden 7a, 7b der Verbindungselemente 4a, 4b (siehe Fig. 5) verbindbar ist. Dies wird erreicht, indem das Koppelelement 10 wenigstens eine Ausnehmung 11 aufweist, in die die Verbindungselemente 4a, 4b eingreifen können. Wenn die Magnetkreisvorrichtung 1 aus den vorgefertigten Modulen ringförmigen Magnetkreiselements 6 und radiales Magnetkreiselements 9 zusammengesetzt wird, ist die Endmontage auf besonders einfache und daher auch auf kostensparende Art und Weise möglich.

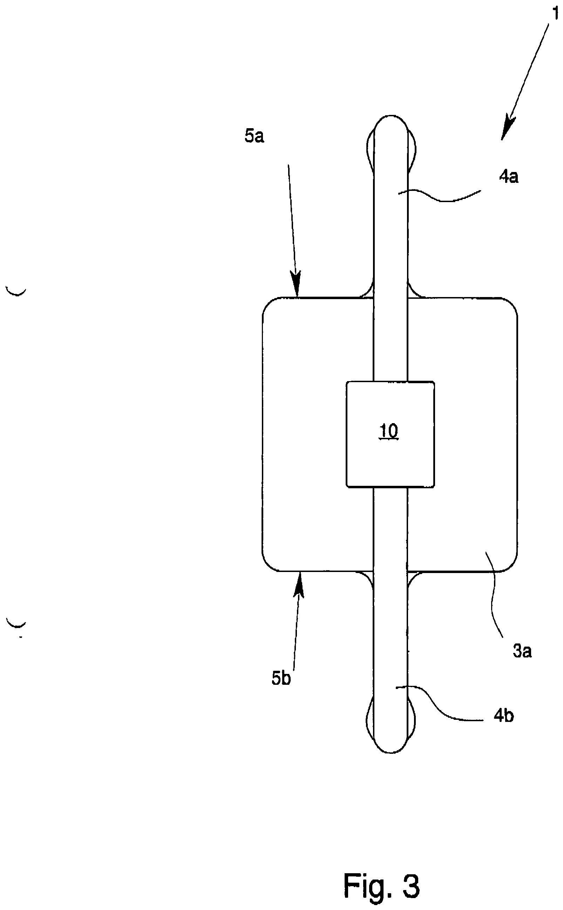

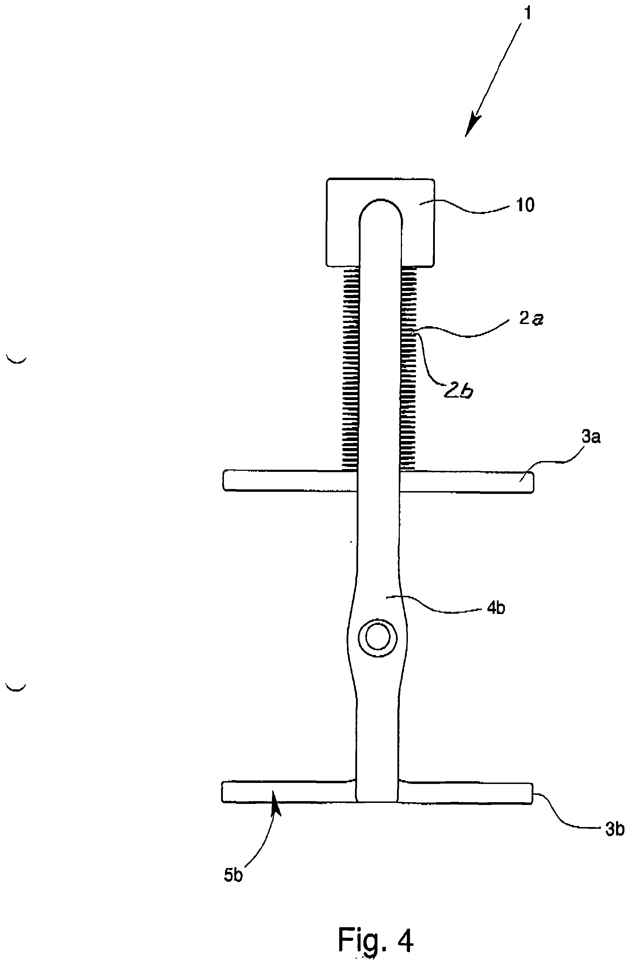

Zu dem Ausführungsbeispiel gemäß den Fig. 1 bis 7 ist ebenfalls als Besonderheit hervorzuheben, dass nur eine einzige Spule 2b Verwendung findet entgegen den sonst bekannten Realisierungen von Magnetkreisen, bei denen üblicherweise zwei Spulen zum Einsatz kommen, je eine Spule pro Polelement. Es hat sich herausgestellt, dass sich sehr gute Messergebnisse auch mit einem nur durch eine Spule in der angegebenen Weise erzeugten Magnetfeld erzielen lassen, was erheblich zur Kostenreduzierung bei der Herstellung und zur Reduzierung der Leistungsaufnahme beim Betrieb beiträgt.

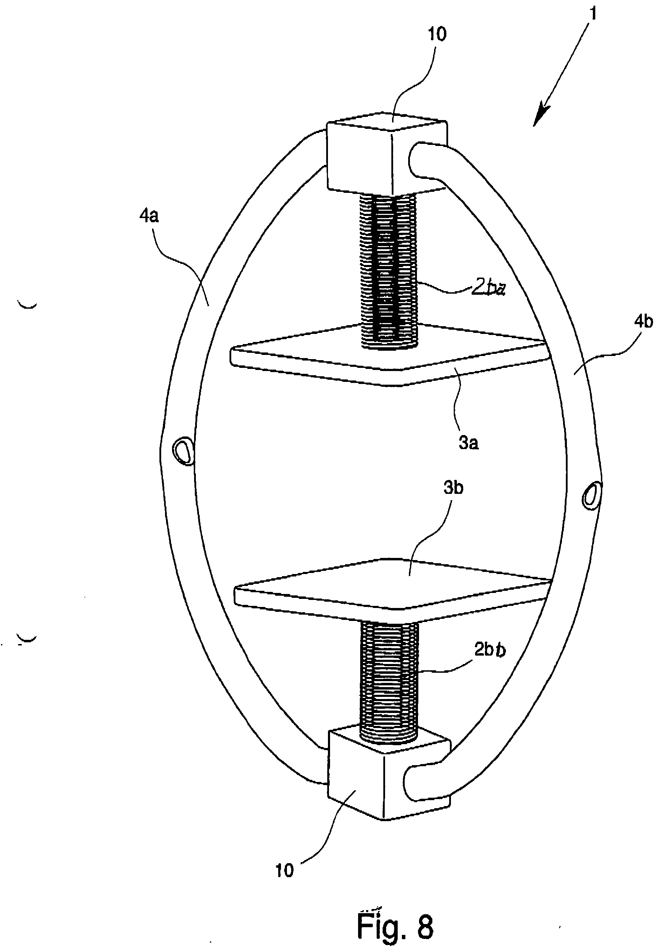

In Fig. 8 ist schließlich ein Ausführungsbeispiel einer nicht unter die Erfindung fallenden Magnetkreisvorrichtung dargestellt, das sich von dem Ausführungsbeispiel gemäß den Fig. 1 bis 7 unterscheidet, indem hier nicht nur eine einzige Spule 2b verwendet wird, sondern vielmehr zwei Spulen 2ba und 2bb zum Einsatz kommen, so dass diese Magnetkreisvorrichtung 1 ein nicht dargestelltes Messrohr eines magnetisch-induktiven Durchflussmessgeräts im Wesentlichen symmetrisch umgibt. Diese Variante hat jedoch nicht den Vorteil, dass nur eine einzige Spule 2b zum Einsatz kommt, weshalb sie nicht so kostengünstig herzustellen ist, wie die in den Fig. 1 bis 7 dargestellte Variante einer Magnetkreisvorrichtung 1.

Die in den Fig. 1 bis 7 dargestellte Magnetkreisvorrichtung ist insbesondere gedacht zum Einsatz mit einem magnetisch-induktiven Durchflussmessgerät zum Anschluss an Leitungen mit einem Nenndurchmesser von einigen zehn Millimetern, so wie sie beispielsweise bei Hausinstallationen vorkommen. Die flächigen Polelemente 3a, 3b sind etwa zwölf Millimeter voneinander beabstandet und die Verbindungselemente 4a, 4b sind stabförmig ausgebildet und weisen einen Durchmesser von etwa 1,7 Millimetern auf, sind im Regelfall also sehr elastisch, so dass die Verbindungselemente 4a, 4b problemlos aufgebogen werden können, sofern der Spalt 8 an den freien Enden vorgesehen ist. Der kleinste Durchmesser der ringförmigen Außenkontur der Magnetkreisvorrichtung 1 misst hier etwa zwanzig Millimeter und die sich gegenüberstehenden Flächen der Polelemente 3a, 3b weisen eine Größe von etwa 170 mm² auf, wobei die Flächen quadratisch von ihrer Grundform sind. Die Spule 2b hat eine Länge von etwa zehn Millimetern mit einem Länge/Durchmesser-Verhältnis von etwas größer als 4, möglicherweise auch von etwas größer als 5, wobei die Spulenwicklungen einen ohmschen Widerstand von etwa 5 Ω aufweist. Mit diesen Randbedingungen lassen sich mit einer Spulenspannung von weniger als 100 mV bereits Ströme erzeugen, die ein für die Durchflussmessung ausreichendes Magnetfeld erzeugen.

Herkömmliche magnetisch-induktive Durchflussmessgeräte, die erheblich höhere Streuverluste haben, müssen mit deutlich höheren Spannungen arbeiten, um ausreichende Stromstärken erzeugen zu können. Das beschriebene Magnetkreiselement 1 führt dazu, dass magnetisch-induktive Durchflussmesser realisiert werden können, die beispielsweise zur Durchflussmessung im Hausbereich einsetzbar sind, batteriebetrieben sind und eine Standzeit von bis zu 20 Jahren aufweisen bei einer Messfrequenz von etwa einer Messung pro Sekunde.

## Patentansprüche

1. Magnetkreisvorrichtung (1) zur Realisierung des Magnetkreises eines magnetisch-induktiven Durchflussmessgeräts, mit wenigstens einer ein Magnetfeld erzeugenden Spule (2b), mit wenigstens zwei sich gegenüberstehenden flächigen Polelementen (3a, 3b), zwischen denen sich im eingebauten Zustand das Messrohr des magnetisch-induktiven Durchflussmessgeräts befindet, und mit wenigstens einem magnetisch leitenden Verbindungselement (4a, 4b) zum Magnetschluss des Magnetkreises, wobei der Querschnitt des Spulenkerns (2a) der Spule (2b) oder / und des magnetisch leitenden Verbindungselements bzw. der magnetisch leitenden Verbindungselemente (4a, 4b) so klein wie möglich ist, ohne jedoch dass Sättigung eintritt, wobei die Magnetkreisvorrichtung (1) zur Reduktion von Streufeldern sowohl eine ringförmige Außenkontur aufweist als auch wenigstens eines der flächigen Polelemente (3a) weiträumig umgreift,
**dadurch gekennzeichnet,**
**dass** ein erstes magnetisch leitendes Verbindungselement (4a) mit einer Schmalseite (5a) eines ersten Polelements (3b) verbunden ist, ein zweites magnetisch leitendes Verbindungselement (4b) mit der gegenüberliegenden Schmalseite (5b) des ersten Polelements (3b) verbunden ist und das erste Verbindungselement (4a), das zweite Verbindungselement (4b) und das erste Polelement (3b) ein ringförmiges Magnetkreiselement (6) bilden, das die ringförmige Außenkontur der Magnetkreisvorrichtung (1) definiert.

2. Magnetkreisvorrichtung (1) nach Anspruch 1, **dadurch gekennzeichnet, dass** der kleinste Durchmesser der ringförmigen Außenkontur der Magnetkreisvorrichtung (1) wenigstens den 1,5-fachen Abstand der sich gegenüberliegenden flächigen Polelemente (3a, 3b) aufweist, vorzugsweise wenigstens den doppelten Abstand.

3. Magnetkreisvorrichtung (1) nach Anspruch 1 oder 2, **dadurch gekennzeichnet, dass** die Kontur der Magnetkreisvorrichtung (1) in der durch die ringförmige Außenkontur gebildeten Ebene Richtungsänderungen unter einem Winkel von wenigstens 90° vollzieht.

4. Magnetkreisvorrichtung (1) nach einem der Ansprüche 1 bis 3, **dadurch gekennzeichnet, dass** die Spule (2b als Zylinderspule ausgebildet ist, insbesondere mit einem Länge/Durchmesser-Verhältnis größer 4, bevorzugt größer 5.

5. Magnetkreisvorrichtung (1) nach einem der Ansprüche 1 bis 4, **dadurch gekennzeichnet, dass** die Spule (2b) direkt benachbart zu einem der Polelemente (3a) angeordnet ist und senkrecht auf dessen Polfläche steht.

6. Magnetkreisvorrichtung (1) nach einem der Ansprüche 1 bis 5, **dadurch gekennzeichnet, dass** die Spule (2b) radial in den Innenbereich der ringförmigen Außenkontur der Magnetkreisvorrichtung (1) ragt.

7. Magnetkreisvorrichtung (1) nach einem der Ansprüche 1 bis 6, **dadurch gekennzeichnet, dass** die flächigen Polelemente (3a, 3b) in der Ebene der ringförmigen Au-ßenkontur der Magnetkreisvorrichtung (1) eine Längserstreckung von 40 % bis 60 % des maximalen Durchmessers der ringförmigen Außenkontur aufweisen, bevorzugt 50 %.

8. Magnetkreisvorrichtung (1) nach einem der Ansprüche 1 bis 7, **dadurch gekennzeichnet, dass** die sich gegenüberstehenden Flächen der Polelemente (3a, 3b) eben ausgebildet sind und insbesondere parallel zueinander verlaufen.

9. Magnetkreisvorrichtung (1) nach einem der Ansprüche 1 bis 8, **dadurch gekennzeichnet, dass** die Spule (2), das an einem Ende der Spule (2) angeordnete Polelement (3a) und ein an dem anderen Ende der Spule (2) angeordnetes Koppelelement (10) ein radiales Magnetkreiselement (9) bilden und das Koppelelement (10) so ausgebildet ist, dass das Koppelelement (10) mit den freien Enden (7a, 7b) der Verbindungselemente (4a, 4b) verbindbar ist, insbesondere mit den freien Enden (7a, 7b) der Verbindungselemente (4a, 4b) des ringförmigen Magnetkreiselements (6).

10. Magnetkreisvorrichtung (1) nach einem der Ansprüche 1 bis 9, **dadurch gekennzeichnet, dass** die flächigen Polelemente (3a, 3b) 10 mm bis 14 mm voneinander beabstandet sind, insbesondere 11 mm bis 13 mm voneinander beabstandet sind, und/oder die Verbindungselemente (4a, 4b) stabförmig mit einem Durchmesser von 1,5 mm bis 2,5 mm ausgestaltet sind und/oder der kleinste Durchmesser der ringförmigen Außenkontur der Magnetkreisvorrichtung (1) zwischen 15 mm und 25 mm misst, insbesondere 20 mm, und/oder die sich gegenüberstehenden Flächen der Polelemente (3a, 3b) eine Größe zwischen 100 mm² und 300 mm² haben, insbesondere von etwa 170 mm², und/oder die Spule (2) eine Länge von 8 mm bis 12 mm, insbesondere 10 mm, auf-GESTHUYSEN Patent- und Rechtsanwälte
weist und/oder die Spulenwicklung der Spule (2) einen ohmschen Widerstand von nicht mehr als 12 Ω, vorzugsweise von etwa 5 Ω aufweist.

11. Magnetisch-induktives Durchflussmessgerät mit mindestens einem Messrohr und mindestens einer Magnetkreisvorrichtung (1) nach einem der Ansprüche 1-10, wobei das mindestens eine Messrohr zwischen den wenigstens zwei sich gegenüberstehenden flächigen Polelementen (3a, 3b) angeordnet ist.

## Claims

1. Magnetic circuit device (1) for implementing the magnetic circuit of a magnetic-inductive flowmeter, having at least one coil (2b) that generates a magnetic field, having at least two mutually opposite planar pole elements (3a, 3b) between which, in the installed state, the measuring tube of the magnetic-inductive flowmeter is located, and having at least one magnetically conductive connecting element (4a, 4b) for magnetic closure of the magnetic circuit, wherein the cross section of the coil core (2a) of the coil (2b) or/and of the magnetically conductive connecting element or elements (4a, 4b) are as small as possible without, however, saturation occurring, wherein the magnetic circuit device (1) has both an annular outer contour for reducing stray fields and encompassing wide-ranging at least one of the planar pole elements (3a),
**characterized in**
**in that** a first magnetically conductive connecting element (4a) is connected to a narrow side (5a) of a first pole element (3b), a second magnetically conductive connecting element (4b) is connected to the opposite narrow side (5b) of the first pole element (3b), and the first connecting element (4a), the second connecting element (4b) and the first pole element (3b) form an annular magnetic circuit element (6) which defines the annular outer contour of the magnetic circuit device (1).

2. Magnetic circuit device (1) according to claim 1, **characterized in that** the smallest diameter of the annular outer contour of the magnetic circuit device (1) has at least 1.5 times the distance between the opposing planar pole elements (3a, 3b), preferably at least twice the distance.

3. Magnetic circuit device (1) according to claim 1 or 2, **characterized in that** the contour of the magnetic circuit device (1) performs directional changes at an angle of at least 90° in the plane formed by the annular outer contour.

4. Magnetic circuit device (1) according to any one of the claims 1 to 3, **characterized in that** the coil (2b) is designed as a cylindrical coil, in particular with a length/diameter ratio greater than 4, preferably greater than 5.

5. Magnetic circuit device (1) according to any one of the claims 1 to 4, **characterized in that** the coil (2b) is arranged directly adjacent to one of the pole elements (3a) and is perpendicular to its pole face.

6. Magnetic circuit device (1) according to any one of the claims 1 to 5, **characterized in that** the coil (2b) projects radially into the inner region of the annular outer contour of the magnetic circuit device (1).

7. Magnetic circuit device (1) according to any one of the claims 1 to 6, **characterized in that** the planar pole elements (3a, 3b) have a longitudinal extension in the plane of the annular outer contour of the magnetic circuit device (1) of 40% to 60% of the maximum diameter of the annular outer contour, preferably 50%.

8. Magnetic circuit device (1) according to any one of claims 1 to 7, **characterized in that** the opposing surfaces of the pole elements (3a, 3b) are flat and, in particular, run parallel to one another.

9. Magnetic circuit device (1) according to any one of the claims 1 to 8, **characterized in that** the coil (2), the pole element (3a) arranged at one end of the coil (2) and a coupling element (10) arranged at the other end of the coil (2) form a radial magnetic circuit element (9), and the coupling element (10) is formed such, that the coupling element (10) can be connected to the free ends (7a, 7b) of the connecting elements (4a, 4b), in particular to the free ends (7a, 7b) of the connecting elements (4a, 4b) of the annular magnetic circuit element (6).

10. Magnetic circuit device (1) according to any one of claims 1 to 9, **characterized in that** the planar pole elements (3a, 3b) are spaced 10 mm to 14 mm apart, in particular 11 mm to 13 mm apart, and/or the connecting elements (4a, 4b) are rod-shaped with a diameter of 1.5 mm to 2.5 mm, and/or the smallest diameter of the annular outer contour of the magnetic circuit device (1) measures between 15 mm and 25 mm, in particular 20 mm, and/or the opposing faces of the pole elements (3a, 3b) have a size of between 100 mm² and 300 mm², in particular of about 170 mm², and/or the coil (2) has a length of 8 mm to 12 mm, in particular 10 mm, and/or the coil winding of the coil (2) has an ohmic resistance of not more than 12 Ω , preferably of about 5 Ω.

11. Magnetic-conductive flowmeter having at least one measuring tube and at least one magnetic circuit device (1) according to any one of claims 1-10, wherein the at least one measuring tube is arranged between the at least two opposing planar pole elements (3a, 3b).

## Revendications

1. Dispositif à circuit magnétique (1) permettant de réaliser un circuit magnétique d'un débitmètre magnéto-inductif, comprenant au moins une bobine (2b) produisant un champ magnétique, au moins deux éléments polaires plans (3a, 3b) opposés, entre lesquels se trouve, à l'état monté, le tube de mesure du débitmètre magnéto-inductif, et au moins un élément de liaison (4a, 4b) magnétiquement conducteur pour la fermeture magnétique du circuit magnétique, dans lequel la section transversale du noyau de bobine (2a) de la bobine (2b) ou/et de l'élément de liaison magnétiquement conducteur ou des éléments de liaison magnétiquement conducteurs (4a, 4b) est aussi petite que possible mais sans qu'une saturation ne survienne, dans lequel le dispositif à circuit magnétique (1) présente à la fois un contour extérieur annulaire et entoure largement au moins l'un des éléments polaires plans (3a) pour la réduction des champs de fuite,
**caractérisé en ce que**
un premier élément de liaison magnétiquement conducteur (4a) est relié à un petit côté (5a) d'un premier élément polaire (3b), un deuxième élément de liaison magnétiquement conducteur (4b) est relié au petit côté opposé (5b) du premier élément polaire (3b), et le premier élément de liaison (4a), le deuxième élément de liaison (4b) et le premier élément polaire (3b) forment un élément à circuit magnétique annulaire (6) qui définit le contour extérieur annulaire du dispositif à circuit magnétique (1).

2. Dispositif à circuit magnétique (1) selon la revendication 1, **caractérisé en ce que** le plus petit diamètre du contour extérieur annulaire du dispositif à circuit magnétique (1) présente au moins 1,5 fois la distance des éléments polaires plans (3a, 3b) opposés, de préférence au moins deux fois la distance.

3. Dispositif à circuit magnétique (1) selon la revendication 1 ou 2, **caractérisé en ce que** le contour du dispositif à circuit magnétique (1) exécute dans le plan formé par le contour extérieur annulaire des changements de direction selon un angle d'au moins 90°.

4. Dispositif à circuit magnétique (1) selon l'une quelconque des revendications 1 à 3, **caractérisé en ce que** la bobine (2b) est réalisée sous la forme d'une bobine cylindrique, ayant en particulier un rapport longueur/diamètre supérieur à 4, de préférence supérieur à 5.

5. Dispositif à circuit magnétique (1) selon l'une quelconque des revendications 1 à 4, **caractérisé en ce que** la bobine (2b) est disposée de manière directement voisine à l'un des éléments polaires (3a) et est perpendiculaire à la surface polaire de celui-ci.

6. Dispositif à circuit magnétique (1) selon l'une quelconque des revendications 1 à 5, **caractérisé en ce que** la bobine (2b) fait radialement saillie dans la zone intérieure du contour extérieur annulaire du dispositif à circuit magnétique (1).

7. Dispositif à circuit magnétique (1) selon l'une quelconque des revendications 1 à 6, **caractérisé en ce que** les éléments polaires plans (3a, 3b) présentent dans le plan du contour extérieur annulaire du dispositif à circuit magnétique (1) une extension longitudinale de 40 % à 60 % du diamètre maximal du contour extérieur annulaire, de préférence de 50 %.

8. Dispositif à circuit magnétique (1) selon l'une quelconque des revendications 1 à 7, **caractérisé en ce que** les surfaces opposées des éléments polaires (3a, 3b) sont réalisées de manière plane et s'étendent en particulier en parallèle l'une à l'autre.

9. Dispositif à circuit magnétique (1) selon l'une quelconque des revendications 1 à 8, **caractérisé en ce que** la bobine (2), l'élément polaire (3a) disposé à une extrémité de la bobine (2), et un élément de couplage (10) disposé à l'autre extrémité de la bobine (2) forment un élément de circuit magnétique radial (9), et l'élément de couplage (10) est réalisé de telle sorte que l'élément de couplage (10) peut être relié aux extrémités libres (7a, 7b) des éléments de liaison (4a, 4b), en particulier aux extrémités libres (7a, 7b) des éléments de liaison (4a, 4b) de l'élément de circuit magnétique annulaire (6).

10. Dispositif à circuit magnétique (1) selon l'une quelconque des revendications 1 à 9, **caractérisé en ce que** les éléments polaires plans (3a, 3b) sont espacés l'un de l'autre de 10 mm à 14 mm, en particulier espacés l'un de l'autre de 11 mm à 13 mm, et/ou les éléments de liaison (4a, 4b) sont configurés en forme de barre ayant un diamètre de 1,5 mm à 2,5 mm, et/ou le plus petit diamètre du contour extérieur annulaire du dispositif à circuit magnétique (1) mesure entre 15 mm et 25 mm, en particulier 20 mm, et/ou les surfaces opposées des éléments polaires (3a, 3b) présentent une dimension entre 100 mm² et 300 mm², en particulier d'environ 170 mm², et/ou la bobine (2) présente une longueur de 8 mm à 12 mm, en particulier de 10 mm, et/ou l'enroulement de bobine de la bobine (2) présente une résistance ohmique qui n'est pas supérieure à 12 Ω, de préférence d'environ 5 Ω.

11. Débitmètre magnéto-inductif, comprenant au moins un tube de mesure et au moins un dispositif à circuit magnétique (1) selon l'une quelconque des revendications 1 à 10, dans lequel ledit au moins un tube de mesure est disposé entre les au moins deux éléments polaires plans (3a, 3b) opposés.
